# EUROPÄISCHE PATENTSCHRIFT

(11) **EP 1 378 690 B1**
(45) Veröffentlichungstag und Bekanntmachung des Hinweises auf die Patenterteilung: **24.01.2007**
(21) Anmeldenummer: 03405412.2
(22) Anmeldetag: 10.06.2003
(51) Int. Cl.: F16J 15/08, F01D 11/00

(54) **Spaltdichtung zum Abdichten eines Spalts zwischen zwei benachbarten Bauteilen**
Sealing for the gap between two parts
Joint pour l'étanchéité de l'interstice entre deux composants

(30) Priorität: 05.07.2002 RU 2002118196
(43) Veröffentlichungstag der Anmeldung: 07.01.2004
(73) Patentinhaber: Alstom Technology Ltd, 5400 Baden (CH)
(72) Erfinder: Beeck, Alexander, Dr., Orlando, Florida 32828 (US); Fokine, Arkadi, 109444 Moskau (RU); Ossipov, Igor, Dr., 129347 Moskau (RU); Sloutski, Edouard, 125239 Moskau (RU)

(56) Entgegenhaltungen:
- EP-A- 1 323 894
- US-A- 3 907 309
- US-A- 6 164 656

## Beschreibung

### Technisches Gebiet

Die Erfindung betrifft eine Spaltdichtung zum Abdichten eines Spalts zwischen zwei benachbarten Bauteilen, insbesondere bei Strömungsmaschinen.

### Stand der Technik

Bei Strömungsmaschinen, wie z.B. Turbine und Verdichter, werden oftmals eine Vielzahl separater einzelner Bauteile an einem Gehäuse oder an einem Rotor befestigt (siehe US-A-6 164 656). Bei diesen Bauteilen handelt es sich in der Regel um Leitschaufeln oder Rotorschaufeln oder um Hitzeschildelemente. Zwischen benachbarten Bauteilen kann dabei ein Spalt ausgebildet sein, über den zwei Räume miteinander kommunizieren. Beispielsweise handelt es sich bei dem einen Raum um eine Turbinenstufe, in der ein heißes Gas unter einem ersten Druck steht, während es sich bei dem anderen Raum um einen Kühlkanal handelt, in dem ein Kühlgas unter einem zweiten Druck vorliegt. Dementsprechend muß der Spalt gasdicht und druckdicht abgedichtet werden, um einerseits einen Gasaustausch zwischen den beiden Räumen zu vermeiden und um andererseits einen Druckabfall in einem der Räume zu verhindern. Zu diesem Zweck werden Spaltdichtungen der eingangs genannten Art eingesetzt.

Insbesondere bei Strömungsmaschinen besteht bei der Abdichtung eines Spalts außerdem die Schwierigkeit, daß die benachbarten Bauteile, zwischen denen der abzudichtende Spalt ausgebildet ist, ihre Relativlage zueinander verändern können, beispielsweise aufgrund von Wärmeausdehnungseffekten. Die Änderung der Relativlage zwischen den beiden Bauteile erzeugt jedoch eine Änderung der Spaltgeometrie, wodurch sich die Abdichtung des Spalts erschwert.

### Darstellung der Erfindung

Hier will die Erfindung Abhilfe schaffen. Die Erfindung, wie sie in den Ansprüchen gekennzeichnet ist, beschäftigt sich mit dem Problem, für eine Spaltdichtung der eingangs genannten Art eine Ausführungsform anzugeben, die auch dann eine hinreichende Abdichtung des Spalts gewährleistet, wenn die Bauteile, zwischen denen der Spalt ausgebildet ist, ihre Relativlage zueinander verändern.

Erfindungsgemäß wird dieses Problem durch eine Spaltdichtung mit den Merkmalen des Anspruches 1 gelöst. Vorteilhafte Ausführungsformen sind in den Unteransprüchen dargelegt.

Die Erfindung beruht auf dem allgemeinen Gedanken, einen Dichtkörper mit federelastischem Profil zwischen zwei an den Bauteilen ausgebildeten, einander gegenüberliegenden Dichtflächen einzuspannen. Diese Bauweise hat zur Folge, daß das Dichtprofil Verstellbewegungen der beiden Bauteile relativ zueinander, die den Abstand zwischen den beiden Dichtflächen vergrößern oder verkleinern, aufgrund seiner Federelastizität folgen kann, so daß in einem relativ weiten Verstellbereich eine hinreichende Dichtwirkung gewährleistet werden kann.

Zweckmäßig besteht ein Band, aus dem durch entsprechende Biegevorgänge der Dichtkörper mit dem gewünschten Profil hergestellt wird, aus einem Federstahl, der in entsprechender Weise gebogen ist. Hierdurch können relativ hohe Vorspannkräfte realisiert werden, mit denen die Kontaktbereiche des Dichtkörpers an den Dichtflächen zur Anlage kommen.

Desweiteren ist vorgesehen, daß sich der Dichtkörper senkrecht zur Federbewegung seiner dichtend an den Dichtflächen anliegenden Kontaktbereiche mit einem zwischen seinen Kontaktbereichen angeordneten Stützbereich an einer Stufe abstützt, die von einem der Bauteile ausgeht und in den Spalt hineinragt. Hierdurch wird eine Fixierung des Dichtkörpers erreicht, die bei Relativverstellung der beiden Bauteile parallel zur Spaltebene dafür sorgt, daß sich die relativ zur Stufe verstellbare Dichtfläche entlang des daran anliegenden Kontaktbereichs des Dichtkörpers verstellen kann, ohne daß sich dadurch die Dichtwirkung reduziert.

Wenn der Spalt zwei Räume unterschiedlichen Drucks miteinander verbindet, stütz sich der Dichtkörper entsprechend einer bevorzugten Ausführungsform auf derjenigen Seite der Stufe ab, die dem Raum mit dem höheren Druck zugewandt ist. Dementsprechend befindet sich dann die Stufe in einem Abschnitt des Spalts, der mit dem anderen Raum kommuniziert, in dem der niedrigere Druck herrscht. Diese Anordnung hat zur Folge, daß der höhere Druck den Dichtkörper gegen die Stufe andrückt, so daß diese an der Stufe fixiert ist.

Bei einer besonders vorteilhaften Weiterbildung kann der Dichtkörper ein im Querschnitt einseitig offenes Hohlprofil aufweisen, wobei dann der Dichtkörper so im Spalt positioniert ist, daß die Profilöffnung dem Raum mit dem höheren Druck zugewandt ist. Durch diese besondere Bauweise und Anordnung des Dichtkörpers herrscht im Hohlprofil des Dichtkörpers der höhere Druck, wodurch die Vorspannung des Dichtprofils zusätzlich verstärkt wird.

Zweckmäßig können die beiden Dichtflächen der Bauteile eben ausgebildet sein und parallel zueinander verlaufen, wobei die beiden Kontaktbereiche auf einer Geraden liegen, die senkrecht auf den Dichtflächen steht. Hierdurch ergibt sich für die bei Relativbewegungen zwischen den Bauteilen auftretende Kraftübertragung von den Bauteilen auf den Dichtkörper eine Symmetrie, durch die die Gefahr einer Verkantung des Dichtkörpers im Spalt reduziert ist.

Gemäß einer Weiterbildung können am Band, aus dem der Dichtkörper gebildet ist, Kontaktkörper ausgebildet sein, welche die Kontaktbereiche aufweisen, mit denen der Dichtkörper an den Dichtflächen der Bauteile anliegt. Bei dieser Bauweise können für die Kontaktkörper und das Band verschiedene Materialien verwendet werden, die in Abhängigkeit der jeweiligen Bauteilfunktion ausgewählt werden können. Beispielsweise wird für das Band ein hochelastischer Federstahl verwendet, während die Kontaktkörper aus einer Relativ weichen Legierung hergestellt werden können, um die Dichtwirkung zu verbessern. Ebenso ist es möglich, die Kontaktkörper aus einem relativ harten Material herzustellen, um dadurch Abrasionseffekte bei den Relativverstellungen zu reduzieren.

Weitere wichtige Merkmale und Vorteile der erfindungsgemäßen Spaltdichtung ergeben sich aus den Unteransprüchen, aus den Zeichnungen und aus der zugehörigen Figurenbeschreibung anhand der Zeichnungen.

### Kurze Beschreibung der Zeichnungen

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Merkmale beziehen. Es zeigen, jeweils schematisch,
- Fig. 1: eine Schnittansicht auf eine Spaltdichtung bei einer ersten Ausführungsform und bei einer ersten Spaltgeometrie,
- Fig. 2: eine Ansicht wie in Fig. 1, jedoch bei einer zweiten Spaltgeometrie,
- Fig. 3: eine Ansicht wie in Fig. 1, jedoch bei einer zweiten Ausführungsform,
- Fig. 4: eine Ansicht wie in Fig. 1, jedoch bei einer dritten Ausführungsform, und
- Fig. 5: eine Ansicht wie in Fig. 1, jedoch bei einer vierten Ausführungsform.

### Wege zur Ausführung der Erfindung

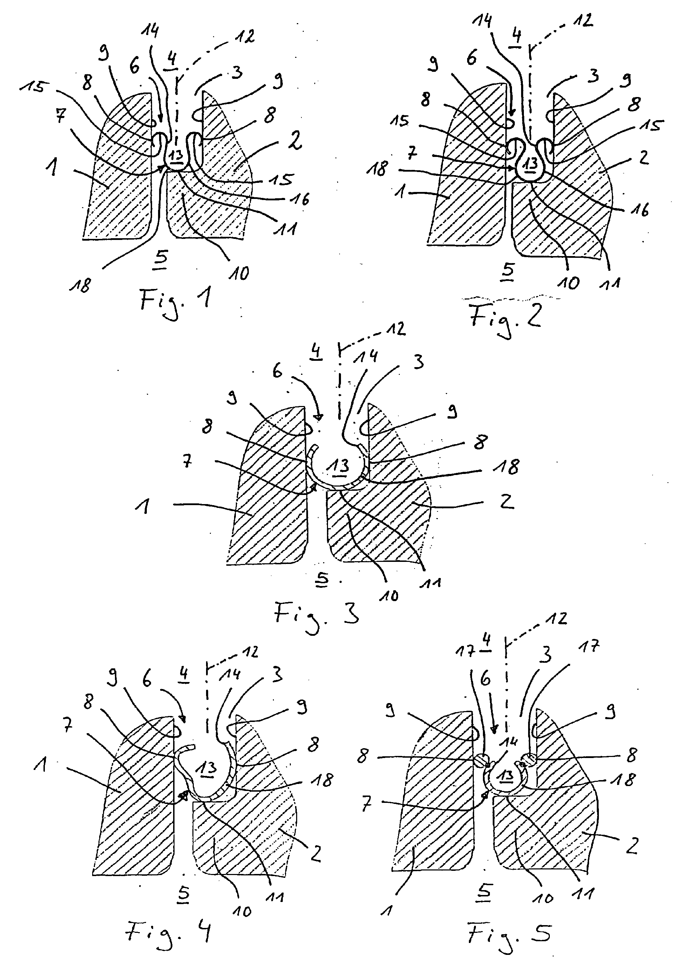

Entsprechend Fig. 1 sind ein nur teilweise dargestelltes erstes Bauteil 1 und ein ebenfalls nur teilweise dargestelltes zweites Bauteil 2 an einem nicht dargestellten Körper, z.B. Gehäuse oder Rotor einer Turbine oder eines Verdichters, so angebracht, daß sie zueinander benachbart sind und zwischen sich einen Spalt 3 ausbilden. Die beiden Bauteile 1 und 2 können beispielsweise durch ein Hitzeschildelement oder durch eine Leitschaufel oder durch eine Rotorschaufel einer Turbine oder eines Verdichters gebildet sein.

Der Spalt 3 führt einenends zu einem ersten Raum 4 und anderenends zu einem zweiten Raum 5. Zwischen diesen beiden Räumen 4 und 5 soll ein Gasaustausch verhindert werden. Zu diesem Zweck ist im Spalt 3 eine Spaltdichtung 6 angeordnet. Erfindungsgemäß umfaßt diese Spaltdichtung 6 einen Dichtkörper 7, der aus einem gebogenen Band 18 oder bandförmigen Teil hergestellt ist. Dieses Band 18 ist dabei so verformt, daß sich der in den Figuren gezeigte Querschnitt ergibt, der im folgenden auch als Dichtprofil bezeichnet wird. Der Dichtkörper 7 besitzt an seinem Dichtprofil zwei Kontaktbereiche 8, die jeweils an einer Dichtfläche 9 der Bauteile 1 und 2 anliegen. Diese Dichtflächen 9 liegen sich im Spalt 3 gegenüber und sind zweckmäßig eben ausgebildet sowie parallel zueinander angeordnet. Die Profilierung des Dichtkörpers 7 ist nun so gewählt, daß die beiden Kontaktbereiche 8 vorgespannt an den beiden Dichtflächen 9 anliegen. Desweiteren gewährleistet das gewählte Dichtprofil ein federelastisches Nachgeben der beiden Kontaktbereiche 8, wenn diese, beispielsweise durch eine entsprechende Bewegung der beiden Bauteile 1 und 2, aufeinander zu bewegt werden. Die Kontaktbereiche 8 können demnach bei derartigen Relativbewegungen zwischen den Bauteilen 1 und 2 den Dichtflächen 9 folgen, um auch bei diesen Relativverstellungen die Dichtwirkung des Dichtkörpers 7 gewährleisten zu können.

An dem einen Bauteil, hier an Bauteil 2, ist an dem dem zweiten Raum 5 zugewandten Ende des Spalts 3 eine Stufe 10 ausgebildet, die von der Dichtfläche 9 dieses Bauteils 2 zum anderen Bauteil 1 hin absteht und dabei in den Spalt 3 hineinragt. Auf der vom zweiten Raum 5 abgewandten Seite der Stufe 10 stützt sich der Dichtkörper 7 mit einem Stützbereich 11 an dieser Stufe 10 senkrecht zu der zuvor beschriebenen Federbewegung der Kontaktzonen 8 ab. Die Richtung dieser Abstützung verläuft somit parallel zu einer Spaltebene 12, die senkrecht zur Zeichnungsebene verläuft und beispielsweise senkrecht auf einer Rotorachse der Turbine oder des Verdichters steht.

Entsprechend den hier gezeigten Ausführungsformen ist das Dichtprofil des Dichtkörpers 7 so geformt, daß der Dichtkörper 7 ein im Querschnitt einseitig offenes Hohlprofil 13 aufweist, das über eine Profilöffnung 14 mit dem Spalt 3 kommuniziert. Für den Fall, daß in den beiden Räumen 4 und 5 unterschiedliche Drücke herrschen, ist zum einen die Stufe 10 so angeordnet, daß sich der Dichtkörper 7 daran an derjenigen Seite abstützt, die dem Raum mit dem höheren Druck zugewandt ist. In den hier gezeigten Ausführungsbeispielen weist somit der erste Raum 4 einen höheren Druck auf als der zweite Raum 5. Die Positionierung des Dichtkörpers 7 im Spalt 3 erfolgt dann zweckmäßig so, daß die Profilöffnung 14 dem Raum mit dem höheren Druck, also hier Raum 4, zugewandt ist, so daß auch im Hohlprofil 13 der höhere Druck herrscht. Hierdurch wird die nach außen gerichtete Vorspannkraft der Kontaktbereiche 8 durch die zwischen den Räumen 4 und 5 herrschende Druckdifferenz verstärkt.

Durch die gewählte Anordnung übt der höhere Druck des ersten Raums 4 eine Druckkraft auf den Dichtkörper 7 aus, die diesen gegen die Stufe 10 anpreßt, wodurch sich eine hinreichend sichere Fixierung oder Positionierung des Dichtkörpers 7 an der Stufe 10 ergibt. Bei einer Relativverstellung zwischen den beiden Bauteilen 1 und 2, bei der sich das eine Bauteil parallel zur Spaltebene 12 relativ zum anderen Bauteil verstellt, kann die Dichtfläche 9 des ersten Bauteils 1 entlang des daran anliegenden Kontaktbereichs 8 gleitend verstellt werden, ohne daß dadurch die Dichtwirkung beeinträchtigt wird. Wenn sich dabei das erste Bauteil entsprechend Fig. 2 relativ zur Stufe 10 nach oben bewegt, verbleibt der Dichtkörper 7 in seiner Position, da die Druckdifferenz zwischen den Räumen 4 und 5 den Dichtkörper 7 entsprechend Fig. 2 nach unten gegen die Stufe 10 vorgespannt hält. Bei einer entgegengesetzten Verstellbewegung, bei der sich also das erste Bauteil 1 entsprechend Fig. 2 nach unten verschiebt, werden die auf den Dichtkörper 7 übertragenen Reibungskräfte direkt über die Stufe 10 abgestützt.

Bei einer anderen Relativverstellung, bei der sich die beiden Bauteile 1 und 2 quasi senkrecht zur Spaltebene 12 relativ zueinander bewegen, führt dies zu einer Vergrößerung oder zu einer Verkleinerung der Spaltweite, also des (senkrechten) Abstands zwischen den beiden Dichtflächen 9. Wenn sich entsprechend Fig. 2 die beiden Dichtflächen 9 aufeinander zu bewegen, verkleinert sich die Spaltweite, wobei die beiden Kontaktflächen 8 des Dichtkörpers 7 ebenfalls aufeinander zu bewegt werden. Durch die erfindungsgemäße Profilierung des Dichtkörpers 7 geben die Kontaktbereiche 8 dabei federelastisch nach. Bei einer entgegengesetzten Verstellbewegung, wenn sich also der Abstand zwischen den Dichtflächen 9 wieder vergrößert, können die Kontaktbereiche 8 den Dichtflächen 9 folgen, wobei auch hier stets eine hinreichende Abdichtung gewährleistet werden kann. Es ist klar, daß auch eine beliebige Kombination der beiden vorgenannten Relativbewegungen gleichzeitig ablaufen kann.

Die Formgebung des Dichtkörpers 7 ist zweckmäßig so gewählt, daß bei einem minimalen Abstand zwischen den beiden Dichtflächen 9, bei dem die Stufe 10 des zweiten Bauteils 2 am ersten Bauteil 1 zur Anlage kommt, noch immer im elastischen Bereich biegeverformt ist. Hierdurch kann auch bei extremen Relativbewegungen die Funktion der Spaltdichtung 6 gewährleistet werden.

Zweckmäßig ist die Profilierung des Dichtkörpers 7 so gewählt, daß die beiden Kontaktbereiche 8 auf einer Geraden liegen, die senkrecht zu den parallel zueinander verlaufenden Dichtflächen 9 verläuft. Hierdurch ergibt sich eine Symmetrie für die am Dichtkörper 7 während der Relativbewegungen zwischen den Bauteilen 1 und 2 angreifenden Kräfte, wodurch die Gefahr einer Verkantung des Dichtkörpers 7 im Spalt 3 reduziert ist.

Bei der Ausführungsform der Fig. 1 und 2 besitzt das Profil des zur Herstellung des Dichtkörpers 7 verwendeten Bandes 18 zwischen zwei Endabschnitten 15 einen das o.g. Hohlprofil 13 umfassenden bzw. bildenden U-förmigen Mittelabschnitt 16, der auch den Stützbereich 11 aufweist. Die Endabschnitte 15 sind nach außen abgerundet umgebogen und tragen die Kontaktbereiche 8.

Bei einer einfacheren Ausführungsform gemäß Fig. 3 kann das zur Herstellung des Dichtkörpers 7 verwendete Band 18 ein C-förmig ausgebildetes Profil aufweisen.

Es ist klar, daß der Dichtkörper 7 grundsätzlich beliebig profiliert sein kann, solange für die Kontaktbereiche 8 die gewünschte Federelastizität gewährleistet ist. Beispielhaft ist daher in Fig. 4 ein unsymmetrisch profilierter Dichtkörper 7 dargestellt.

Während bei den Ausführungsformen der Fig. 1 bis 4 die Kontaktbereiche 8 stets direkt an dem Band 18 ausgebildet sind, aus dem der Dichtkörper 7 hergestellt ist, trägt das Band 18 bei der Ausführungsform gemäß Fig. 5 Kontaktkörper 17, an denen die Kontaktbereiche 8 ausgebildet sind. Die Kontaktkörper 17 können am Band 18 des Dichtkörpers 7 beispielsweise angeschweißt oder angelötet sein. Hierdurch ist es möglich, die Materialauswahl und/oder die Formgebung des Bandes 18 und der Kontaktkörper 17 hinsichtlich der jeweiligen Funktion zu optimieren. Während die Kontaktkörper 17 hinsichtlich der Dichtfunktion und der Verschiebbarkeit der Kontaktzone 8 entlang der Dichtfläche 9 des ersten Bauteils 1 optimiert ist, kann die Auslegung des Bandes 18 hinsichtlich der gewünschten Federvorspannung erfolgen.

### Bezugszeichenliste

- 1: erstes Bauteil
- 2: zweites Bauteil
- 3: Spalt
- 4: erster Raum
- 5: zweiter Raum
- 6: Spaltdichtung
- 7: Dichtkörper
- 8: Kontaktbereich
- 9: Dichtfläche
- 10: Stufe
- 11: Stützbereich
- 12: Spaltebene
- 13: Hohlprofil
- 14: Profilöffnung
- 15: Endabschnitt
- 16: Mittelabschnitt
- 17: Kontaktkörper
- 18: Band

## Patentansprüche

1. Anordnung zum Abdichten eines Spalts (3) zwischen zwei benachbarten Bauteilen (1,2) bei einer Turbine oder bei einem Verdichter, mit einem Dichtkörper (7) aus einem Band (18), das im Querschnitt so gebogen ist, dass zwei daran ausgebildete Kontaktbereiche (8) an zwei sich im Spalt (3) gegenüberliegenden Dichtzonen (9) der Bauteile (1,2) vorgespannt anliegen, wobei sich der Spalt (3) in einer Spaltebene (12) erstreckt, die senkrecht auf einer Rotorachse der Turbine oder des Verdichters steht,
**dadurch gekennzeichnet,**
- **dass** die Dichtzonen als Dichtflächen (9) ausgestaltet sind, die eben ausgestaltet sind und sich parallel zur Spaltebene (12) erstrecken,
- **dass** sich die Bauteile (1, 2) senkrecht zur Spaltebene (12) aufeinander zu bewegen können, so dass sich ein Abstand zwischen den Dichtflächen (9) verkleinert,
- **dass** die Kontaktbereiche (8) bei einer Verkleinerung des Abstands zwischen den Dichtflächen (9) federelastisch nachgeben,
- **dass** sich ein zwischen den Kontaktbereichen (8) ausgebildeter Stützbereich (11) senkrecht zur Federbewegung an einer Stufe (10) abstützt, die an einem der Bauteile (2) ausgebildet ist und von dessen Dichtfläche (9) zur Dichtfläche (9) des anderen Bauteils (1) hin absteht.

2. Anordnung nach Anspruch 1,
**dadurch gekennzeichnet,**
**dass** der Spalt (3) zwei Räume (4,5) unterschiedlichen Drucks miteinander verbindet, wobei sich der Dichtkörper (7) auf derjenigen Seite der Stufe (10) abstützt, die den Raum (4) mit dem höheren Druck zugewandt ist.

3. Anordnung nach Anspruch 2,
**dadurch gekennzeichnet,**
**dass** der Dichtkörper (7) ein im Querschnitt einseitig offenes Hohlprofil (13) aufweist, wobei eine Profilöffnung (14) dem Raum (4) mit dem höheren Druck zugewandt ist.

4. Anordnung nach einem der Ansprüche 1 bis 3,
**dadurch gekennzeichnet,**
**dass** das Band (18) aus entsprechend gebogenem Federstahl besteht.

5. Anordnung nach einem der Ansprüche 1 bis 4,
**dadurch gekennzeichnet,**
**dass** die beiden Dichtflächen (9) der Bauteile (1,2) eben ausgebildet sind und parallel zueinander verlaufen und dass die beiden Kontaktbereiche (8) auf einer Geraden liegen, die senkrecht auf den Dichtflächen (9) steht.

6. Anordnung nach einem der Ansprüche 1 bis 5,
**dadurch gekennzeichnet,**
**dass** das Band (18) ein C-förmig ausgebildetes Profil aufweist.

7. Anordnung nach einem der Ansprüche 1 bis 5,
**dadurch gekennzeichnet,**
**dass** das Profil des Bandes (18) zwischen zwei Endabschnitten (15) einen U-förmigen Mittelabschnitt (18) mit dem Stützbereich (11) aufweist, wobei die Endabschnitte (15) nach außen abgerundet umgebogen sind und die Kontaktbereiche (8) aufweisen.

8. Anordnung nach einem der Ansprüche 1 bis 7,
**dadurch gekennzeichnet,**
**dass** am Band (18) Kontaktkörper (17) ausgebildet sind, welche die Kontaktbereiche (8) aufweisen.

9. Anordnung nach einem der Ansprüche 1 bis 8,
**dadurch gekennzeichnet,**
**dass** die Stufe (10) soweit von der zugehörigen Dichtfläche (9) absteht, dass die Biegeverformung des Dichtkörpers (7) auch dann im elastischen Bereich bleibt, wenn die Stufe (10) aufgrund einer entsprechenden Relativbewegung der Bauteile (1,2) an der gegenüberliegenden Dichtfläche (9) bzw. am gegenüberliegenden Bauteil (1) zur Anlage kommt.

10. Anordnung nach einem der Ansprüche 1 bis 9,
**dadurch gekennzeichnet,**
**dass** zumindest eines der Bauteile (1,2) eine Leitschaufel oder eine Rotorschaufel oder ein Hitzeschildelement einer Turbine oder eines Verdichters ist.

## Claims

1. Arrangement for sealing of a gap (3) between two adjacent component parts (1, 2) in a turbine or in a compressor, with a sealing component (7) from a strip (18), which in cross section is bent so that two contact areas (8) which are formed on it lie with pretensioned effect on two sealing zones (9) of the component parts (1, 2), which sealing zones lie opposite each other in the gap (3), wherein the gap (3) extends in a gap plane (12) which is perpendicular to a rotor axis of the turbine or the compressor,
**characterized in that**
- the sealing zones are designed as sealing surfaces (9) which are designed flat and extend parallel to the gap plane (12),
- the component parts (1, 2) are able to move onto each other perpendicularly to the gap plane (12) so that a distance between the sealing surfaces (9) decreases,
- the contact areas (8) spring-elastically comply during a decrease of the distance between the sealing surfaces (9),
- a support area (11), which is formed between the contact areas (8), is supported perpendicularly to the spring movement on a step (10) which is formed on one of the component parts (2), and projects from the sealing surface (9) thereof towards the sealing surface (9) of the other component part (1).

2. Arrangement according to Claim 1,
**characterized in that**
the gap (3) interconnects two cavities (4, 5) of different pressure, wherein the sealing component (7) is suppported on that side of the step (10) which faces the cavity (4) with the higher pressure.

3. Arrangement according to Claim 2,
**characterized in that**
the sealing component (7) has a hollow profile (13) which in cross section is open on one side, wherein a profile opening (14) faces the cavity (4) with the higher pressure.

4. Arrangement according to one of Claims 1 to 3,
**characterized in that**
the strip (18) consists of correspondingly bent spring steel.

5. Arrangement according to one of Claims 1 to 4,
**characterized in that**
the two sealing surfaces (9) of the component parts (1, 2) are formed flat and extend parallel to each other, and the two contact areas (8) lie on a straight line which is perpendicular to the sealing surfaces (9).

6. Arrangement according to one of Claims 1 to 5,
**characterized in that**
the strip (18) has a profile which is formed into a C-shape.

7. Arrangement according to one of Claims 1 to 5,
**characterized in that**
the profile of the strip (18) has between two end sections (15) a U-shaped centre section (18) with the support area (11), wherein the end sections (15) are bent outwards in a rounded manner and have the contact areas (8).

8. Arrangement according to one of Claims 1 to 7,
**characterized in that**
contact components (17) are formed on the strip (18), which have the contact areas (8).

9. Arrangement according to one of Claims 1 to 8,
**characterized in that**
the step (10) projects so far from the associated sealing surface (9) that the bending deformation of the sealing component (7) remains within the elastic range even if the step (10), on account of a corresponding relative movement of the component parts (1, 2), comes to lie on the oppositely disposed sealing surface (9) or on the oppositely disposed component part (1), as the case may be.

10. Arrangement according to one of Claims 1 to 9,
**characterized in that**
at least one of the component parts (1, 2) is a stator blade, or a rotor blade, or a heat shield element of a turbine or a compressor.

## Revendications

1. Agencement pour réaliser l'étanchéité d'un interstice (3) entre deux composants adjacents (1, 2), dans une turbine ou un compresseur, comprenant un corps d'étanchéité (7) constitué d'une bande (18) qui est courbée en section transversale de telle sorte que deux zones de contact (8) réalisées sur celle-ci s'appliquent avec une précontrainte contre deux zones d'étanchéité (9) des composants (1, 2), en regard dans l'interstice (3), l'interstice (3) s'étendant dans un plan d'interstice (12) qui est perpendiculaire à un axe de rotor de la turbine ou du compresseur,
**caractérisé en ce que**
- les zones d'étanchéité sont réalisées sous forme de surfaces d'étanchéité (9) qui sont planes et s'étendent parallèlement au plan de l'interstice (12),
- **en ce que** les composants (1, 2) peuvent se déplacer l'un vers l'autre perpendiculairement au plan de l'interstice (12) de sorte qu'une distance entre les surfaces d'étanchéité (9) diminue,
- **en ce que** les zones de contact (8) cèdent élastiquement par ressort dans le cas d'une diminution de la distance entre les surfaces d'étanchéité (9),
- **en ce qu'**une zone de support (11) réalisée entre les zones de contact (8) s'appuie perpendiculairement au mouvement de ressort contre un gradin (10) qui est réalisé sur l'un des composants (2) et dont la surface d'étanchéité (9) dépasse par rapport à la surface d'étanchéité (9) de l'autre composant (1).

2. Agencement selon la revendication 1,
**caractérisé en ce que**
l'interstice (3) relie l'un à l'autre deux espaces (4, 5) de pressions différentes, le corps d'étanchéité (7) s'appuyant du côté du gradin (10) qui est tourné vers l'espace (4) ayant la pression la plus élevée.

3. Agencement selon la revendication 2,
**caractérisé en ce que**
le corps d'étanchéité (7) présente un profil creux (13) ouvert d'un côté en section transversale, une ouverture du profil (14) étant tournée vers l'espace (4) ayant la pression la plus élevée.

4. Agencement selon l'une quelconque des revendications 1 à 3,
**caractérisé en ce que**
la bande (18) se compose d'acier à ressort cintré de manière correspondante.

5. Agencement selon l'une quelconque des revendications 1 à 4,
**caractérisé en ce que**
les deux surfaces d'étanchéité (9) des composants (1, 2) sont planes et s'étendent parallèlement l'une à l'autre et **en ce que** les deux zones de contact (8) se situent sur une droite qui est perpendiculaire aux surfaces d'étanchéité (9).

6. Agencement selon l'une quelconque des revendications 1 à 5,
**caractérisé en ce que**
la bande (18) présente un profil en forme de C.

7. Agencement selon l'une quelconque des revendications 1 à 5,
**caractérisé en ce que**
le profil de la bande (18) présente entre deux portions d'extrémité (15) une portion centrale en forme de U (18) avec la zone de support (11), les portions d'extrémité (15) étant cintrées de manière arrondie vers l'extérieur et présentant les zones de contact (8).

8. Agencement selon l'une quelconque des revendications 1 à 7,
**caractérisé en ce que**
des corps de contact (17) sont réalisés sur la bande (18) et présentent les zones de contact (8).

9. Agencement selon l'une quelconque des revendications 1 à 8,
**caractérisé en ce que**
le gradin (10) dépasse de la surface d'étanchéité (9) associée dans une mesure telle que la déformation en flexion du corps d'étanchéité (7) reste aussi dans la plage élastique lorsque le gradin (10), sous l'effet d'un mouvement relatif correspondant des composants (1, 2), vient en appui contre la surface d'étanchéité (9) opposée ou contre le composant opposé (1).

10. Agencement selon l'une quelconque des revendications 1 à 9,
**caractérisé en ce**
**qu'**au moins l'un des composants (1, 2) est une aube directrice ou une aube de rotor ou un élément formant écran thermique d'une turbine ou d'un compresseur.
